# EUROPÄISCHE PATENTSCHRIFT

(11) **EP 3 458 760 B1**
(45) Veröffentlichungstag und Bekanntmachung des Hinweises auf die Patenterteilung: **13.04.2022**
(21) Anmeldenummer: 17723687.4
(22) Anmeldetag: 15.05.2017
(51) Int. Cl.: F16L 13/14

(54) **FITTING ZUR HERSTELLUNG EINER DICHTEN VERBINDUNG UMFASSEND EIN HALTEELEMENT MIT KONTAKTFLÄCHEN**
FITTING FOR PRODUCING A LEAKTIGHT CONNECTION COMPRISING A RETAINING ELEMENT WITH CONTACT SURFACES
RACCORD SERVANT À RÉALISER UNE LIAISON ÉTANCHE COMPORTANT UN ÉLÉMENT DE RETENUE DOTÉ DE SURFACES DE CONTACT

(30) Priorität: 17.05.2016 DE 102016109034
(43) Veröffentlichungstag der Anmeldung: 27.03.2019
(73) Patentinhaber: Viega Technology GmbH & Co. KG, 57439 Attendorn (DE)
(72) Erfinder: KOST, Alexander, 57439 Attendorn (DE); MÜLLER, Andreas, 57258 Freudenberg (DE); HARTMANN, Anton, 57439 Attendorn (DE); WIETHOFF, Benedikt, 59889 Niedersalwey (DE); ARNING, Ulrich, 57439 Attendorn (DE); RISCHEN, Christian, 59889 Eslohe (DE)
(74) Vertreter: Cohausz & Florack
(86) Internationale Anmeldenummer: PCT/EP2017/061594
(87) Internationale Veröffentlichungsnummer: WO 2017/198606

(56) Entgegenhaltungen:
- EP-A1- 2 916 059
- EP-A2- 2 623 832
- DE-U1- 20 219 600
- DE-U1-202004 002 138
- US-A1- 2015 285 420

## Beschreibung

Die Erfindung betrifft einen Fitting zur Herstellung einer dichten Verbindung mit einem Rohrende, mit mindestens einem Pressabschnitt, welcher zum Einführen eines Rohrendes und für eine Verpressung eingerichtet ist, mit mindestens einem Dichtelement und mit mindestens einem Halteelement, wobei das Dichtelement und das Halteelement im Pressabschnitt angeordnet sind, wobei das Halteelement im Wesentlichen ringförmig ausgebildet ist, wobei die Ringform eine Umfangsrichtung sowie eine Axialrichtung definiert und wobei das Halteelement in Bezug auf die Umfangsrichtung zwei Enden aufweist. Weiter betrifft die Erfindung ein System und ein Verfahren zur Herstellung einer dichten Verbindung zwischen einem erfindungsgemäßen Fitting und einem Rohrende.

Fittings der eingangs genannten Art werden im Stand der Technik unter anderem zur Herstellung einer dichten Verbindung in der Rohrleitungstechnik und im Stahlbau verwendet, insbesondere zum Führen von Fluiden oder Gasen in Rohren und deren Verbindungen. Ein Rohrende wird dabei in einen Pressabschnitt des Fittings eingeführt und zumindest der Pressabschnitt des Fittings radial einwärts mit dem Rohrende verpresst, insbesondere über eine Pressmaschine, und dadurch eine dichte, dauerhafte Verbindung geschaffen. Die Verbindung kann zudem unlösbar sein, d.h. nicht ohne eine Zerstörung des Rohrendes oder des Fittings wieder zu trennen sein.

Ein gattungsgemäßer Fitting weist zumindest ein Dichtelement und ein Halteelement auf. Dabei wird üblicherweise die Abdichtung der herzustellenden Verbindung durch das Dichtelement bewirkt, welches beispielsweise aus einem elastischen Material besteht und in dichte Anlage an den Fitting und das Rohrende gebracht wird. Das Halteelement dient üblicherweise vorwiegend zur mechanischen Fixierung der Verbindung und unterbindet ein ungewolltes Lösen der Verbindung. Das Halteelement besteht üblicherweise aus einem harten, nicht elastischen Material und geht mit dem Werkstück einen Kraftschluss oder Formschluss ein, insbesondere durch ein Einpressen oder Einschneiden in das Werkstück.

Aus der EP 0 922 896 A1, EP 2 916 059 A1, DE 202 19 600 U1, US 2015/285420A1 und der DE 102 07 201 A1 sind Fittings bekannt, welche als Schneidelemente ausgeführte Halteelemente aufweisen. Schneidelement und Dichtelemente sind insbesondere in zwei verschiedenen Abschnitten an einer Innenumfangsfläche des Fittings angeordnet.

Weiter beschreiben die EP 2 623 832 A2, EP 1593 899 A1 und WO 2010/089188 A1 Fittings, bei welchen ein als Schneidelement ausgeführtes Halteelement und ein Dichtelement gemeinsam in einem Pressabschnitt angeordnet sind. Schneidelement und Dichtelement sind bei der EP 1 593 899 A1 und WO 2010/089188 A1 durch einen zwischenliegenden Trennring getrennt.

Die EP 1 593 898 A1 offenbart weiter ein Dichtelement für einen Fitting aus einem elastischen Material, wobei innerhalb des Dichtelements Schneidelemente eingelagert sind.

Problematisch bei den als Schneidelementen ausgeführten Halteelementen ist jedoch, dass diese üblicherweise komplexe Formen aufweisen und Schneidkanten in ein hartes Material eingearbeitet werden müssen. Schneidelemente werden oft als Stanzbiegeteile oder Formteile ausgeführt und sind damit relativ aufwändig und kostenintensiv zu produzieren. Weiter ist das Halteelement, besonders wenn der Fitting im Erdreich eingesetzt wird, oft korrosiven Bedingungen ausgesetzt. Mit einer Ausführung des Halteelements als Schneidelement ist die Materialstärke im Bereich der Schneidkante konstruktionsbedingt gering, so dass das Schneidelement oft wenig korrosionsbeständig ist. Die Schneidkante bietet auch oft keine flächige Anlage zu dem Rohrende, womit korrosive Medien leicht durch das Halteelement dringen können und somit in das Innere des Fittings gelangen.

Ein Halteelement in einem Fitting mit einer vereinfachten Herstellung ist aus der WO 2008/053315 A1 bekannt. Das Halteelement ist in einer offenen Ringform mit einer Ausnehmung und zwei Enden in Bezug auf die Umfangsrichtung ausgeführt, so dass sich das Halteelement bei einer radial einwärts gerichteten Verpressung in Umfangsrichtung ohne Weiteres komprimieren lässt. Die Ausnehmung wird in der WO 2008/053315 A1 so bemessen, dass auch nach einer Verpressung in der Ringform des Halteelements eine Ausnehmung verbleibt und die Enden in Umfangsrichtung nicht aneinanderstoßen. Somit ist auch bei Maßabweichungen der Elemente des Fittings und des Rohrendes gewährleistet, dass sich das Halteelement stets bei einer radial einwärts gerichteten Verpressung in Umfangsrichtung einfach komprimieren lässt. Dadurch, dass eine Ausnehmung nach der Verpressung verbleibt und das Halteelement somit im verpressten Zustand eine offene Ringform aufweist, ist das Halteelement allerdings weiterhin durchlässig bezüglich korrosiver Medien, welche über die Ausnehmung leicht in den Fitting gelangen können.

Der vorliegenden Erfindung liegt die Aufgabe zu Grunde, einen Fitting mit einem Halteelement anzugeben, welches einen verbesserten Korrosionsschutz aufweist und insbesondere kostengünstig herzustellen ist. Weiter soll ein System und ein Verfahren zur Herstellung einer dichten Verbindung zwischen einem erfindungsgemäßen Fitting und einem Rohrende angegeben werden.

Gemäß einer ersten Lehre wird die genannte Aufgabe betreffend einen Fitting dadurch gelöst, dass das Halteelement an den zwei Enden jeweils mindestens eine Kontaktfläche aufweist, welche zumindest anteilig in Umfangsrichtung verläuft und dass die Kontaktflächen dafür eingerichtet sind, bei einer Verpressung des Pressabschnitts miteinander in Kontakt gebracht zu werden.

Durch die Anordnung von Kontaktflächen an den umfangsseitigen Enden des Halteelements, wobei die Kontaktflächen über eine Verpressung miteinander in Kontakt gebracht werden, kann eine zusätzliche Dichtwirkung des Halteelements bewirkt werden. Insbesondere wird ein Eindringen von korrosiven Medien oder anderen Fremdstoffen in das Innere des Fittings gehemmt. Weiterhin wird eine zusätzliche zweite Abdichtung gegenüber dem geförderten Medium erzielt, welche durch die metallische Abdichtung durch das Halteelement von Temperatur und Medium unabhängig ist. Dieses hat den Vorteil für die Notlaufeigenschaft des Fittings im Versagensfall der primären Dichtung, wenn diese beispielsweise im Brandfall bei zu hohen Temperaturen oder durch eine Einleitung von falschen Medien, da die zusätzliche Abdichtung durch das Halteelement einen Totalausfall der Verbindung vermeiden oder zumindest teilweise auffangen kann.

Durch die Ausgestaltung der Kontaktflächen als zumindest anteilig in Umfangsrichtung des Halteelements verlaufende Flächen ist gewährleistet, dass auch bei Maßabweichungen bzw. Toleranzen in den zu verpressenden Elementen sowohl die zusätzliche Dichtwirkung als auch eine Kompressibilität in Umfangsrichtung erhalten bleibt. Die zumindest anteilig in Umfangsrichtung des Halteelements verlaufenden Kontaktflächen sind insbesondere als Gleitflächen ausgebildet und erlauben ein Gleiten der jeweiligen Kontaktflächen übereinander, so dass für einen Bereich von verschiedenen, mit der Verpressung zu erreichenden Umfängen des Halteelements eine Dichtwirkung erzielt wird. Somit kann das Halteelement im Gegensatz zu solchen Halteelementen, welche senkrecht zur Umfangsrichtung verlaufende Kontaktflächen aufweisen, Maßabweichungen der zu verpressenden Elemente ausgleichen. Auch wird eine besonders gleichmäßige Verpressung des Halteelements und des Rohrendes erreicht.

Mit "im Wesentlichen ringförmig" in Bezug auf die Ausgestaltung des Halteelements ist gemeint, dass das Halteelement entlang einer Umfangsrichtung zumindest näherungsweise eine geschlossene Form aufweist, welche insbesondere an die Form des Umfangs eines einzuführenden Rohrs angepasst ist. Bei einem Rohrende mit einem kreisförmigen Querschnitt kann das Halteelement die Form eines Kreisrings bzw. eines Abschnitts eines Kreisrings annehmen. Andere Ausgestaltungen sind für weitere Anwendungen möglich, beispielsweise an Ellipsen oder Polygone angelehnte Formen bzw. Abschnitte hiervon.

Das Halteelement weist ein Material auf, welches eine für die Verpressung ausreichende Härte und Verformbarkeit zeigt. Insbesondere weist das Halteelement Metall auf oder besteht aus Metall.

Das Halteelement ist bevorzugt seitlich des Dichtelements distal zu einem in den Pressabschnitt eingeführten Rohrende angeordnet. Damit kann das Halteelement die zusätzliche Dichtwirkung gegenüber der Außenseite der Verbindung des Fittings mit dem Rohrende entfalten. Dies ist insbesondere bei einer Verwendung des Fittings im Erdreich oder unter sonstigen korrosiven Bedingungen vorteilhaft. Denkbar ist allerdings auch, dass das Halteelement seitlich des Dichtelements proximal zu einem in den Pressabschnitt eingeführten Rohrende angeordnet ist und somit eine zusätzliche Dichtwirkung des Fittings gegenüber einem im Fitting bzw. im Rohrende geführten Medium bewirkt.

Der Fitting weist über die in Kontakt stehenden Kontaktflächen nach einer erfolgten Verpressung eine geschlossene Ringform auf. In einer Ausgestaltung des Fittings ist das Halteelement dafür eingerichtet, durch eine Verpressung des Pressabschnitts in eine geschlossene Ringform gebracht zu werden, d.h. das Halteelement weist vor einer Verpressung eine offene Ringform und nach einer Verpressung eine geschlossene Ringform auf. Die offene Ringform vor der Verpressung kann auf einfache Weise mittels einer Ausnehmung im Halteelement gegeben sein. Im Laufe der Verpressung treten die Kontaktflächen miteinander in Kontakt, wobei jedoch über die zumindest anteilig in Umfangsrichtung des Halteelements verlaufenden Kontaktflächen Maßabweichungen in den Elementen ausgeglichen werden können und die Kontaktflächen insbesondere übereinander gleiten. Nach erfolgter Verpressung verbleibt das Halteelement über die in Kontakt stehenden Kontaktflächen in einer geschlossenen Ringform und bewirkt somit einen zusätzlichen Dichteffekt.

In einer alternativen Ausgestaltung des Fittings weist das Halteelement vor einer Verpressung bereits eine geschlossene Ringform auf, d.h. insbesondere die Enden in Bezug auf die Umfangsrichtung stehen bereits im Kontakt. Bei einer Verpressung treten zusätzliche Kontaktflächen miteinander in Kontakt, womit eine geschlossene Ringform erhalten bleibt.

In einer weiteren Ausgestaltung des Fittings werden die Kontaktflächen über mindestens eine relativ zur Umfangsrichtung geneigte Fläche gebildet. Über solche geneigte Flächen, welche in einem Winkel zur Umfangsrichtung stehen, können die Kontaktflächen einfach hergestellt werden und auch gleitende Eigenschaften aufweisen. Bei einer Verpressung des Fittings und einer damit einhergehenden Kompression des Halteelements in Umfangsrichtung schieben sich die geneigten Flächen aufeinander und stellen somit Kontaktflächen dar, welche auf einfache Weise eine weitere Kompression des Halteelements in Umfangsrichtung erlauben und über den Kontakt eine Dichtwirkung bereitstellen.

In einer anderen Ausgestaltung des Fittings werden die Kontaktflächen über abgerundete Flächen gebildet. Beispielsweise sind Kontaktflächen in Form von Kugelsegmenten oder Kugelkalotten vorgesehen. Auch solche Ausgestaltungen stellen geeignete Kontaktflächen dar.

In einer weiteren Ausgestaltung des Fittings verlaufen die Kontaktflächen im Wesentlichen zueinander parallel. Dadurch sind die Formen der Kontaktflächen an den jeweiligen Enden des Halteelements einander angepasst, insbesondere als zueinander positive und negative Formen, und ergeben besonders großflächige Anlagen nach einer Verpressung. Mit "im Wesentlichen" ist hierbei gemeint, dass Abweichungen in der Parallelität der Form der Flächen lediglich im Bereich der Fertigungstoleranz des Halteelements liegen.

In einer weiteren Ausgestaltung des Fittings sind die Enden des Halteelements in Axialrichtung zueinander versetzt angeordnet. Hierdurch werden die Enden des Halteelements bei einer Kompression des Halteelements in Umfangsrichtung aneinander vorbei geschoben. Die Kontaktflächen können hierbei dafür einrichtet sein, die axial zueinander versetzten Enden bei einem Verpressen aneinander vorbei gleiten zu lassen. Insbesondere sind die Enden des Halteelements vor einer Verpressung in Axialrichtung zueinander versetzt angeordnet, befinden sich jedoch in einer Ebene. Damit wird ein minimaler Materialaufwand für eine geschlossene Ringform im unverpressten Zustand erreicht.

Erfindungsgemäß ist der Querschnitt des Halteelements in Umfangsrichtung im Wesentlichen elliptisch ausgestaltet. Insbesondere weist das Halteelement einen kreisförmigen Querschnitt auf. Hierdurch kann das Halteelement besonders einfach und kostengünstig hergestellt werden, insbesondere durch eine Umformung eines Halbzeugs wie einem Draht. Mit einem elliptischen Querschnitt wird im Gegensatz zu als mit beispielsweise scharfkantigen Schneidelementen ausgeführten Halteelementen eine besonders große Anlagefläche zwischen Halteelement und dem eingeführten Rohrende bei einer Verpressung bereitgestellt. Somit wird insbesondere der zusätzliche Dichteffekt des Halteelements verstärkt.

Erfindungsgemäß ist der Querschnitt des Halteelements in Umfangsrichtung im Wesentlichen rechteckig ausgestaltet. Insbesondere kann der Querschnitt im Wesentlichen quadratisch ausgestaltet sein. Auch diese Ausgestaltung erlaubt eine einfache und kostengünstige Herstellung aus einem Halbzeug. Mit einem rechteckigen bzw. quadratischen Querschnitt wird ebenfalls eine großflächige Anlagefläche zum Rohrende geschaffen, wobei durch die Ecken bzw. Kanten im Querschnitt auch ein zusätzlicher Schneideffekt entstehen kann.

Der Querschnitt des Halteelements weist in Umfangsrichtung mindestens eine Ausnehmung auf, insbesondere auch in einem zuvor beschriebenen elliptischen oder rechteckigen Querschnitt. Durch eine Ausnehmung wird eine zusätzliche Struktur in das Halteelement eingebracht, welche ein Einpressen oder Einschneiden des Halteelements in das Material des Rohrendes fördert, ohne dass komplexe Herstellungsvorgänge für das Einbringen von Schneidkanten anfallen. Die Ausnehmung ist rechteckig, V-förmig, in Form eines Kreisabschnitts oder Langlochs ausgestaltet. Für die V-Form kann je nach Anwendung und Materialien auch der Öffnungswinkel der Ausnehmung variiert werden.

Ebenso können mehrere Ausnehmungen im Querschnitt vorgesehen sein. Insbesondere kann jeweils eine Ausnehmung an einander gegenüberliegenden Enden des Querschnitts angeordnet sein, beispielsweise zwei gegenüberliegende Ausnehmungen oder vier, jeweils um 90° zueinander verdrehte Ausnehmungen. Dadurch kann beispielsweise auch eine Schneidwirkung des Halteelements in das Material der Wandung des Fittings bewirkt werden.

Ebenso kann das Halteelement im Querschnitt in Umfangsrichtung mindestens einen Hohlraum aufweisen. Dadurch kann Material und Gewicht eingespart werden.

Die zuvor beschriebenen Querschnittsformen des Halteelements stellen eine unabhängige Lösung dar, die auch ohne die beschriebenen Kontaktflächen das oben aufgezeigte technische Problem selbständig lösen.

In einer weiteren Ausgestaltung des Fittings ist ein zusätzliches Trennelement vorgesehen, welches zwischen Dichtelement und Halteelement angeordnet ist. Das zusätzliche Trennelement kann insbesondere das Dichtelement vor einer Beeinträchtigung während der Verpressung bewahren und weiter zur Dichtheit beitragen. Das zusätzliche Trennelement weist insbesondere Kunststoff, Metall, Holz, Mineralien und/oder Verbundwerkstoffe auf oder besteht aus diesen Materialien.

Gemäß einer weiteren Lehre wird die oben genannte Aufgabe betreffend ein System zur Herstellung einer dichten Verbindung dadurch gelöst, dass die Innenfläche des Pressabschnitts sowie das Halteelement und das Dichtelement an die Außenfläche des Rohrendes angepasst sind. Mit einer entsprechenden Anpassung kann sowohl die Verformung bei der Verpressung, als auch die entstehende Dichtigkeit optimiert werden. Bei dem einfachen Fall eines kreisförmigen Querschnitts des Rohrendes ist beispielsweise der Innendurchmesser des Halteelements an den Außendurchmesser des Rohrendes angepasst.

Gemäß einer weiteren Lehre wird die oben genannte Aufgabe betreffend ein Verfahren zur Herstellung einer dichten Verbindung gelöst, bei dem das Rohrende zumindest in den Pressabschnitt des Fittings eingeführt wird, bei dem der Fitting zumindest am Pressabschnitt verpresst wird, wodurch das Dichtelement zwischen Fitting und Rohrende verformt wird und das mindestens eine Haltelement in das Material des Rohrendes eingepresst wird, und bei dem mittels des Verpressens die Kontaktflächen des Halteelements miteinander in Kontakt gebracht werden.

Wie bereits oben zum Fitting ausgeführt, kann durch die Ausgestaltung der Kontaktflächen erreicht werden, dass auch bei Maßabweichungen bzw. Toleranzen in dem zu verpressenden Elementen sowohl eine zusätzliche Dichtwirkung durch das Halteelement als auch eine Kompressibilität in Umfangsrichtung des Halteelements gewährleistet wird. Auch wird eine besonders gleichmäßige Verpressung des Halteelements und des Rohrendes erreicht.

Das mindestens eine Halteelement kann zusätzlich auch in das Material der Wandung des Fittings eingepresst werden. Dadurch wird eine zusätzliche Haltewirkung des Fittings und des Rohrendes erreicht.

Durch das Verpressen kann ein Kraftschluss und/oder Formschluss zwischen Halteelement und Rohrende bzw. zwischen Halteelement und Wandung des Fittings bewirkt werden.

Bezüglich weiterer Ausgestaltungen und Vorteile des Systems und des Verfahrens wird auf die obigen Ausführungen zum Fitting sowie auf die nachfolgende Beschreibung der Zeichnung verwiesen. In der Zeichnung zeigt
- Fig. 1a, b: ein erstes Ausführungsbeispiel eines Fittings 2 zur Herstellung einer dichten Verbindung mit einem Rohrende 4 in einer Schnittansicht,
- Fig. 2a, b: ein erstes Ausführungsbeispiel eines Halteelements 12 in einer Vorderansicht bzw. einer Draufsicht,
- Fig. 3a, b: ein zweites Ausführungsbeispiel eines Halteelements 12 in einer Vorderansicht bzw. einer Draufsicht,
- Fig. 4a, b: ein drittes Ausführungsbeispiel eines Halteelements 12 in einer Vorderansicht bzw. einer Draufsicht,
- Fig. 5a, b: ein viertes Ausführungsbeispiel eines Halteelements 12 in einer Vorderansicht bzw. einer Draufsicht,
- Fig. 6a, b: ein fünftes und sechstes Ausführungsbeispiel des Halteelements 12 in perspektivischen Ansichten und
- Fig. 7a-l: verschiedene Ausführungsbeispiele für Querschnitte des Halteelements 12 in schematischen Ansichten.

In der nachfolgenden Beschreibung der verschiedenen erfindungsgemäßen Ausführungsbeispiele werden gleiche Bauteile mit gleichen Bezugszeichen versehen, auch wenn die Bauteile bei den verschiedenen Ausführungsbeispielen in ihrer Dimension oder Form Unterschiede aufweisen können.

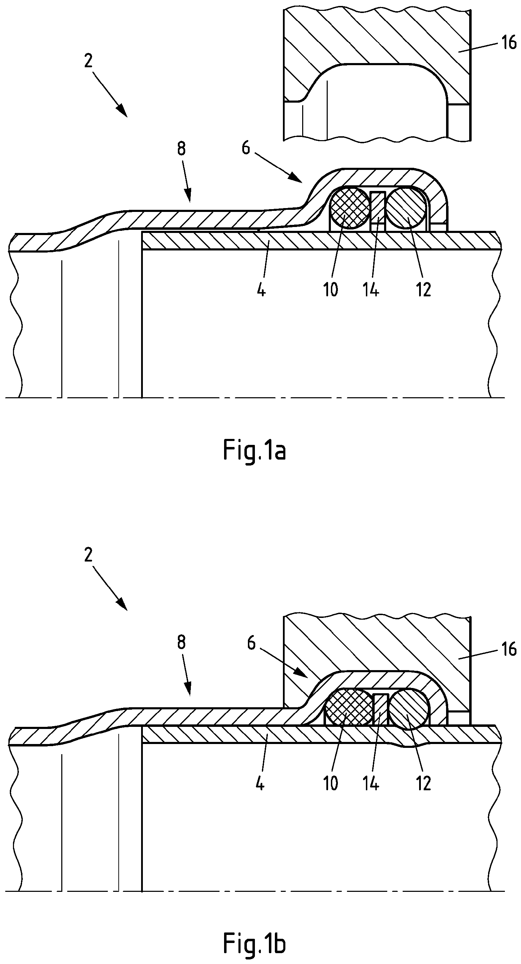

Fig. 1a zeigt ein erstes Ausführungsbeispiel eines Fittings 2 zur Herstellung einer dichten Verbindung mit einem Rohrende 4 im unverpressten Zustand in einer Schnittansicht. Der Fitting 2 weist einen Pressabschnitt 6 und einen Kontaktbereich 8 auf. Der Kontaktbereich 8 weist einen Innendurchmesser auf, welcher näherungsweise dem Außendurchmesser des Rohrende 4 entspricht, so dass das Rohrende 4 mittels einer Anlage im Kontaktbereich 8 gehalten werden kann. Der Pressabschnitt 6 ist ebenfalls über eine entsprechende Dimensionierung zum Einführen des Rohrendes 4 eingerichtet.

Im Pressbereich 6 des Fittings 2 sind ein Dichtelement 10 und ein Halteelement 12 angeordnet. Ein zusätzliches Trennelement 14 ist vorgesehen, welches zwischen Dichtelement 10 und Halteelement 12 angeordnet ist. Das Halteelement 12 ist im Wesentlichen ringförmig ausgebildet. Die Ringform des Halteelements 12 definiert hierbei eine Umfangsrichtung, welche in Fig. 1 senkrecht zur Schnittebene verläuft, sowie eine Axialrichtung, welche in Fig. 1 der Vorzugsrichtung des Rohrendes 4 entspricht und in der Schnittebene verläuft.

Weiter dargestellt ist in Fig. 1a ein Presswerkzeug 16, welches einer radial einwärts gerichteten Verpressung des Pressabschnitts 6 und damit zur Herstellung der dichten Verbindung zwischen Fitting 2 und Rohrende 4 dient.

Fig. 1b zeigt den Fitting 2 und das Rohrende 4 nach einer erfolgten Verpressung durch das Presswerkzeug 16. Das Dichtelement 10, welches aus einem elastischen Material besteht und beispielsweise die Form eines O-Rings annimmt, ist so verformt, dass es sich in einer dichten Anlage zum Pressabschnitt 6 und zum Rohrende 4 befindet. Mittels des Dichtelements 10 ist die hergestellte Verbindung dicht gegenüber Flüssigkeiten und/oder Gasen, welche durch das Rohrende 4 und den Fitting 2 geleitet werden können. Eine mechanische Fixierung und insbesondere eine Unlösbarkeit der Verbindung werden über das Halteelement 12 bewirkt, welches über die Verpressung in das Material des Rohrendes 4 eingeformt wird. Dadurch wird die Verbindung mechanisch fixiert.

Weiter wird über die spezielle Ausgestaltung des Halteelements 12 eine zusätzliche Dichtwirkung erreicht, welche die Verbindung von Fitting 2 und Rohrende 4 vor Einflüssen von außen, beispielsweise vor dem Eindringen von korrosiven Medien schützt. Die Ausgestaltung des Halteelements 12 wird im Zusammenhang mit der Beschreibung der nachfolgenden Figuren erläutert.

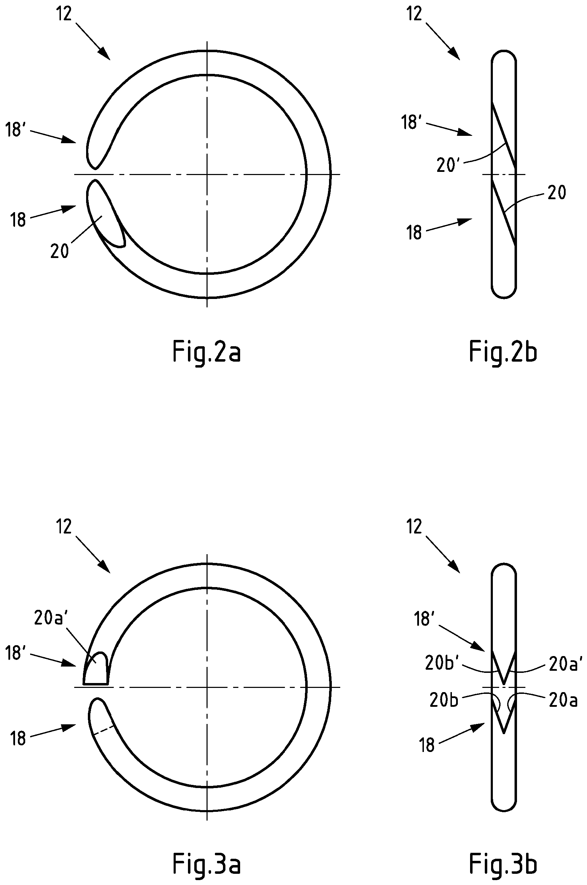

Fig. 2 - 5 zeigen hierzu verschiedene Ausführungsbeispiele des Halteelements 12. Die Halteelemente 12 sind im Wesentlichen ringförmig ausgestaltet und weisen eine offene Kreisringform auf. Die Halteelemente 12 weisen dabei in Bezug auf die Umfangsrichtung zwei Enden 18, 18' auf. An den zwei Enden 18, 18' sind jeweils mindestens eine Kontaktfläche 20, 20', 20a, 20b, 20a', 20b' angeordnet, welche zumindest anteilig in Umfangsrichtung verlaufen.

Fig. 2a zeigt ein erstes Ausführungsbeispiel eines Halteelements 12 in einer Vorderansicht. Die Kontaktflächen 20, 20' sind über relativ zur Umfangsrichtung geneigte Flächen gebildet, so dass die Kontaktflächen 20, 20' anteilig in Umfangsrichtung verlaufen. Wird ein Fitting mit dem Halteelement 12 verpresst, wirkt auf das Halteelement 12 in Umfangsrichtung eine Kompressionskraft, so dass der Umfang des Halteelements 12 verringert wird. Die Kontaktflächen 20, 20' können dann bei einer Verpressung des Pressabschnitts miteinander in Kontakt gebracht werden. Das Halteelement 12 wird somit durch die Verpressung in eine geschlossene Ringform gebracht, womit ein zusätzlicher Dichteffekt des Halteelements 12 erreicht wird.

Durch die Ausgestaltung der Kontaktflächen 20, 20' als zumindest anteilig in Umfangsrichtung des Halteelements 12 verlaufende Flächen ist gewährleistet, dass auch bei Maßabweichungen bzw. Toleranzen in den zu verpressenden Elementen sowohl die zusätzliche Dichtwirkung als auch eine Kompressibilität in Umfangsrichtung erhalten bleibt. Auch wird eine besonders gleichmäßige Verpressung des Halteelements 12 erreicht.

Wie aus der Draufsicht des Halteelements 12 in Fig. 2b deutlich wird, verlaufen die Kontaktflächen 20, 20' im Wesentlichen parallel. Dadurch wird bei einer Verpressung eine großflächige Anlage der Kontaktflächen 20, 20' erreicht.

Fig. 3a und 3b zeigen ein zweites Ausführungsbeispiel eines Halteelements 12 in einer Vorderansicht bzw. in einer Draufsicht. In diesem Ausführungsbeispiel sind an den zwei Enden 18, 18' jeweils zwei Kontaktflächen 20a, 20b; 20a', 20b' vorgesehen, welche als relativ zur Umfangsrichtung geneigte Flächen ausgestaltet sind. Insgesamt ergibt sich eine V-förmige Ausnehmung in der Ringform des Halteelements 12 mit im Wesentlichen parallel zueinander verlaufenden Kontaktflächen 20a, 20b; 20a', 20b'.

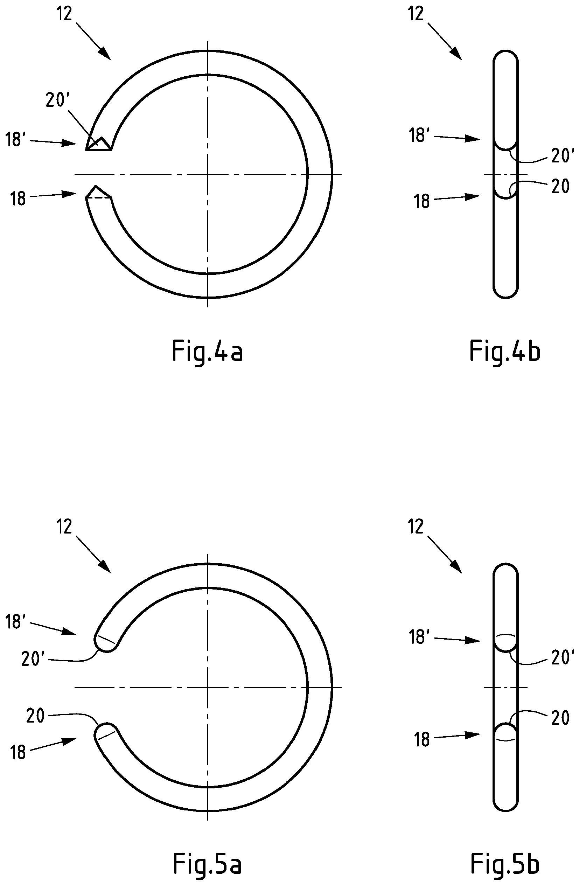

Fig. 4a und 4b zeigen ein drittes Ausführungsbeispiel eines Halteelements 12 in einer Vorderansicht bzw. in einer Draufsicht. Die Kontaktflächen 20, 20' sind als relativ zur Umfangsrichtung abgerundete Flächen bzw. Kugelabschnitte ausgebildet. Der Verlauf der Kontaktflächen 20, 20' ist im Wesentlichen parallel zueinander.

Fig. 5a und 5b zeigen ein viertes Ausführungsbeispiel eines Halteelements 12 in einer Vorderansicht bzw. in einer Draufsicht. Die Kontaktflächen 20, 20' sind als relativ zur Umfangsrichtung abgerundete Flächen bzw. jeweils als Kugelkalotte ausgebildet.

Die Fig. 2-5 zeigen Ausführungsbeispiele des Halteelements 12, welche dafür eingerichtet sind, durch eine Verpressung in eine geschlossene Ringform gebracht zu werden, d.h. das Halteelement 12 weist in Fig. 2-5 vor einer Verpressung eine offene Ringform und nach einer Verpressung eine geschlossene Ringform auf.

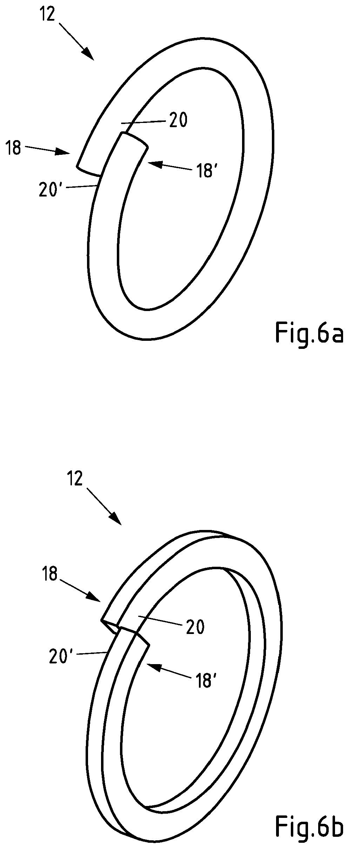

In einer alternativen Ausgestaltung des Fittings weist das Halteelement 12 vor einer Verpressung bereits eine geschlossene Ringform auf. Fig. 6a und 6b zeigen hierzu weitere Ausführungsbeispiele des Halteelements 12 in perspektivischen Ansichten.

Das fünfte Ausführungsbeispiel des Halteelements 12 in Fig. 6a weist einen kreisförmigen Querschnitt auf. Die Enden 18, 18' des Halteelements 12 sind in Axialrichtung zueinander versetzt angeordnet. Hierdurch werden die Enden 18, 18' des Halteelements 12 bei einer Kompression des Halteelements 12 in Umfangsrichtung aneinander vorbei geschoben. Kontaktflächen 20, 20' sind in Axialrichtung seitlich am Halteelement 12 angeordnet. Bei einem Verpressen des Halteelements 12 bzw. einer Kompression des Halteelements 12 in Umfangsrichtung werden die Kontaktflächen 20, 20' aufeinander geschoben und treten somit in Kontakt.

Fig. 6b zeigt ein sechstes Ausführungsbeispiel des Halteelements 12. Der Querschnitt des Halteelements ist rechteckig ausgeführt. Auch hier sind die Enden 18, 18' des Halteelements 12 vor einer Verpressung in Axialrichtung zueinander versetzt angeordnet, befinden sich jedoch in einer Ebene. Damit wird ein minimaler Materialaufwand für eine geschlossene Ringform im unverpressten Zustand erreicht.

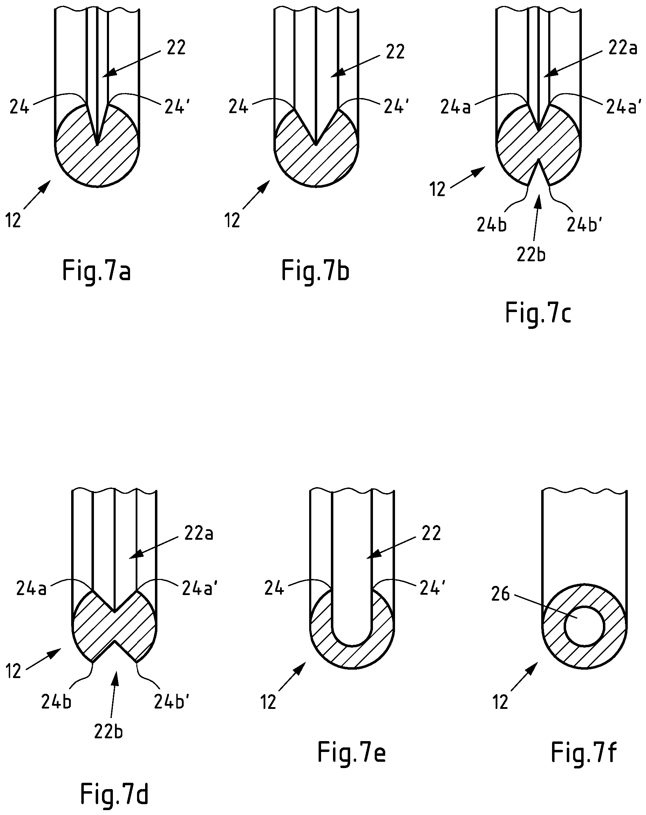

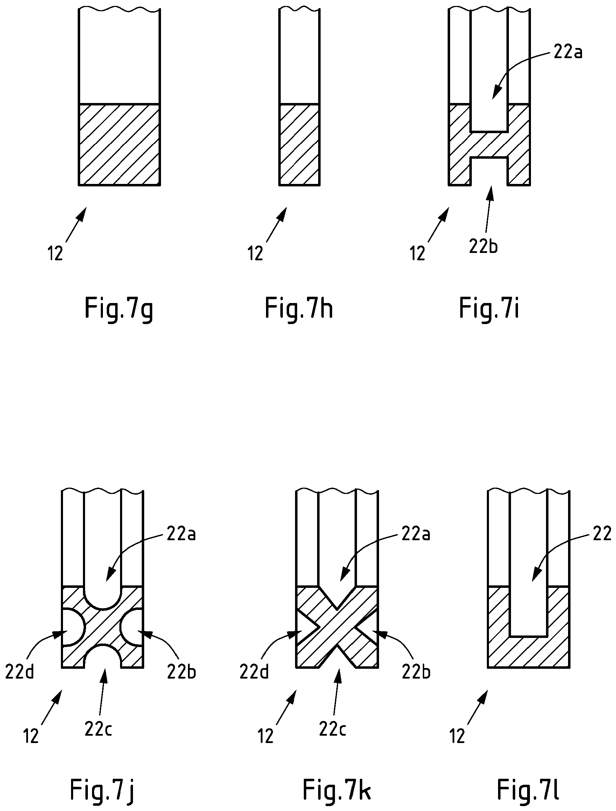

Fig. 7 zeigt verschiedene Ausführungsbeispiele für Querschnitte des Halteelements 12. Fig. 7a-f zeigen hierbei Variationen von elliptischen bzw. kreisförmigen Querschnitten, während Fig. 7g-l Variationen von rechteckigen Querschnitten darstellen.

Fig. 7a zeigt einen kreisförmigen Querschnitt des Halteelements 12, wobei eine V-förmige Ausnehmung 22 vorgesehen ist. Mit der V-förmigen Ausnehmung 22 werden zwei Kanten 24, 24' bereitgestellt, welche beispielsweise für eine Verpressung in das Material eines Rohrendes dienen können. Fig. 7b zeigt einen ähnlichen Querschnitt wie Fig. 7b mit einem größeren Öffnungswinkel der V-förmigen Ausnehmung 22, womit die Form der Kanten 24, 24' variiert werden kann.

Fig. 7c zeigt einen kreisförmigen Querschnitt des Halteelements 12 mit zwei V-förmigen Ausnehmungen 22a, 22b, welche an gegenüberliegenden Seiten des Querschnitts angeordnet sind. Entsprechend sind vier Kanten 24a, 24b; 24a', 24b' vorhanden, welche insbesondere einerseits in das Material des Rohrendes und andererseits in die Wandung des Fittings eingepresst werden können. Fig. 7d zeigt einen ähnlichen Querschnitt wie Fig. 7c mit einem größeren Öffnungswinkeln der Ausnehmungen 22a, 22b, womit die Form der Kanten 24a, 24b; 24a', 24b' variiert werden kann.

Fig. 7e zeigt einen kreisförmigen Querschnitt des Halteelements 12 mit einer Ausnehmung 22 in Form eines Langlochs bzw. einer Nut mit einem halbkreisförmigen Grund. Auch hier sind zwei Kanten 24, 24' für eine Verpressung vorhanden.

Fig. 7e zeigt einen kreisförmigen Querschnitt des Halteelements 12 mit einem kreisförmigen Hohlraum 26 zur Einsparung von Material und Gewicht.

Fig. 7g zeigt in einer besonders einfachen Ausführung einen quadratischen Querschnitt des Halteelements 12. Fig. 7h zeigt analog hierzu einen rechteckigen Querschnitt.

Die Fig. 7i-l zeigen nun Variationen von Ausnehmungen 22, 22a, 22b, 22c, 22d in einem quadratischen Querschnitt. In Fig. 7i sind zwei rechteckige Ausnehmungen 22a, 22b vorgesehen. Die Fig. 7j und 7k zeigen jeweils vier Ausnehmungen 22a, 22b, 22c, 22d in Form von Halbkreisen bzw. Rechtecken. Fig. 7l zeigt eine rechteckige Ausnehmung 22. Auch mit den Ausgestaltungen gemäß den Fig. 7g-l entstehen Kanten im Querschnitt, welche in das Material des Rohrendes und/oder in die Wandung des Fittings eingepresst werden können.

## Patentansprüche

1. Fitting zur Herstellung einer dichten Verbindung mit einem Rohrende (4),
- mit mindestens einem Pressabschnitt (6), welcher zum Einführen eines Rohrendes (4) und für eine Verpressung eingerichtet ist,
- mit mindestens einem Dichtelement (10) und
- mit mindestens einem Halteelement (12),
- wobei das Dichtelement (10) und das Halteelement (12) im Pressabschnitt (6) angeordnet sind,
- wobei das Halteelement (12) im Wesentlichen ringförmig ausgebildet ist,
- wobei die Ringform eine Umfangsrichtung sowie eine Axialrichtung definiert,
- wobei das Halteelement (12) in Bezug auf die Umfangsrichtung zwei Enden (18, 18') aufweist,
- wobei das Halteelement (12) an den zwei Enden (18, 18') jeweils mindestens eine Kontaktfläche (20, 20', 20a, 20a', 20b, 20b') aufweist, welche zumindest anteilig in Umfangsrichtung verläuft und
- wobei die Kontaktflächen (20, 20', 20a, 20a', 20b, 20b') dafür eingerichtet sind, bei einer Verpressung des Pressabschnitts (6) miteinander in Kontakt gebracht zu werden,
**dadurch gekennzeichnet,**
- **dass** der Querschnitt des Halteelements (12) in Umfangsrichtung im Wesentlichen elliptisch oder im Wesentlichen rechteckig ausgestaltet ist,
- **dass** der Querschnitt des Halteelements (12) in Umfangsrichtung mindestens eine Ausnehmung (22, 22a, 22b, 22c, 22d) aufweist, wobei mit der mindestens eine Ausnehmung (22, 22a, 22b, 22c, 22d) Kanten im Querschnitt entstehen, welche in das Material des Rohrendes (4) und/oder in die Wandung des Fittings eingepresst werden können, und
- **dass** die mindestens eine Ausnehmung (22, 22a, 22b, 22c, 22d) rechteckig, V-förmig oder in Form eines Kreisabschnitts ausgestaltet ist.

2. Fitting nach Anspruch 1,
**dadurch gekennzeichnet,**
**dass** das Halteelement (12) dafür eingerichtet ist, durch eine Verpressung des Pressabschnitts (6) in eine geschlossene Ringform gebracht zu werden.

3. Fitting nach Anspruch 1 oder 2,
**dadurch gekennzeichnet,**
**dass** die Kontaktflächen (20, 20', 20a, 20a', 20b, 20b') über mindestens eine relativ zur Umfangsrichtung geneigte Fläche oder über abgerundete Flächen gebildet werden.

4. Fitting nach einem der Ansprüche 1 bis 3,
**dadurch gekennzeichnet,**
**dass** die Kontaktflächen (20, 20', 20a, 20a', 20b, 20b') im Wesentlichen zueinander parallel verlaufen.

5. Fitting nach einem der Ansprüche 1 bis 4,
**dadurch gekennzeichnet,**
**dass** die Enden (18, 18') des Halteelements (12) in Axialrichtung zueinander versetzt angeordnet sind.

6. Fitting nach einem der Ansprüche 1 bis 5,
**dadurch gekennzeichnet**,
ein zusätzliches Trennelement (14) vorgesehen ist, welches zwischen Dichtelement (10) und Halteelement (12) angeordnet ist.

7. System zur Herstellung einer dichten Verbindung
- mit einem Fitting (2) nach einem der Ansprüche 1 bis 6 und
- mit einem Rohrende (4),
**dadurch gekennzeichnet,**
**dass** die Innenfläche des Pressabschnitts (6) sowie das Halteelement (12) und das Dichtelement (14) an die Außenfläche des Rohrendes (4) angepasst sind.

8. Verfahren zur Herstellung einer dichten Verbindung zwischen einem Fitting (2) nach einem der Ansprüche 1 bis 6 und einem Rohrende (4),
- bei dem das Rohrende (4) zumindest in den Pressabschnitt (6) des Fittings (2) eingeführt wird,
- bei dem der Fitting (2) zumindest am Pressabschnitt (6) verpresst wird, wodurch das Dichtelement (10) zwischen Fitting (2) und Rohrende (4) verformt wird und das mindestens eine Haltelement (12) in das Material des Rohrendes (4) eingepresst wird, und
- bei dem mittels des Verpressens die Kontaktflächen (20, 20', 20a, 20a', 20b, 20b') des Halteelements (12) miteinander in Kontakt gebracht werden.

## Claims

1. Fitting for producing a leak-tight connection with a pipe end (4),
- with at least one pressing portion (6) which is configured for insertion of a pipe end (4) and for compression,
- with at least one sealing element (10.) and
- with at least one retaining element (12),
- wherein the sealing element (10) and the retaining element (12) are arranged in the pressing portion (6),
- wherein the retaining element (12) is substantially annular,
- wherein the annular form defines a circumferential direction and an axial direction, and
- wherein the retaining element (12) has two ends (18, 18') in relation to the circumferential direction,
**characterised in that**
- the retaining element (12) has at each of the two ends (18, 18') at least one contact surface (20, 20', 20a, 20a', 20b, 20b') which extends at least partially in the circumferential direction, and
- the contact surfaces (20, 20', 20a, 20a', 20b, 20b') are configured to be brought into contact with each other upon compression of the pressing portion (6) and
- that at least a recess (22, 22a, 22b, 22c, 22d) is configured so as to be in particular rectangular, V-shaped or in the form of a circle portion.

2. Fitting according to Claim 1, **characterised in that** the retaining element (12) is configured to be brought into a closed annular form by compression of the pressing portion (6).

3. Fitting according to Claim 1 or 2, **characterised in that** the contact surfaces (20, 20', 20a, 20a', 20b, 20b') are formed via at least one surface inclined relative to the circumferential direction or via rounded surfaces.

4. Fitting according to any one of Claims 1 to 3, **characterised in that** the contact surfaces (20, 20', 20a, 20a', 20b, 20b') run substantially parallel to each other.

5. Fitting according to any one of Claims 1 to 4, **characterised in that** the ends (18, 18') of the retaining element (12) are arranged offset to each other in the axial direction.

6. Fitting according to any one of Claims 1 to 5, **characterised in that** an additional separating element (14) is provided which is arranged between the sealing element (10) and the retaining element (12).

7. System for producing a leak-tight connection
- with a fitting (2) according to any one of Claims 1 to 6, and
- with a pipe end (4),
**characterised in that**
the inner surface of the pressing portion (6) and the retaining element (12) and the sealing element (14) are adapted to the outer surface of the pipe end (4).

8. Method for producing a leak-tight connection between a fitting (2) according to any one of Claims 1 to 6 and a pipe end (4),
- wherein the pipe end (4) is inserted at least into the pressing portion (6) of the fitting (2),
- wherein the fitting (2) is compressed at least at the pressing portion (6), whereby the sealing element (10) between the fitting (2) and the pipe end (4) is deformed and the at least one retaining element (12) is pressed into the material of the pipe end (4), and
- wherein by means of the compression, the contact surfaces (20, 20', 20a, 20a', 20b, 20b') of the retaining element (12) are brought into contact with each other.

## Revendications

1. Raccord pour réaliser une liaison étanche avec une extrémité de tuyau (4),
- avec au moins une section de pressage (6), qui est configurée pour introduire une extrémité de tuyau (4) et pour un pressage,
- avec au moins un élément d'étanchéité (10) et
- avec au moins un élément de maintien (12),
- l'élément d'étanchéité (10) et l'élément de maintien (12) étant disposés dans la section de pressage (6),
- l'élément de maintien (12) étant réalisé sensiblement en forme annulaire,
- la forme annulaire définissant une direction circonférentielle ainsi qu'une direction axiale,
- l'élément de maintien (12) présentant deux extrémités (18, 18') par rapport à la direction circonférentielle,
- l'élément de maintien (12) présentant à chacune des deux extrémités (18, 18') au moins une surface de contact (20, 20', 20a, 20a', 20b, 20b') qui s'étend au moins en partie dans la direction circonférentielle et
- les surfaces de contact (20, 20', 20a, 20a', 20b, 20b') étant configurées pour être mises en contact les unes avec les autres lors d'un pressage de la section de pressage (6),
**caractérisé**
- **en ce que** la section transversale de l'élément de maintien (12) est configurée de manière sensiblement elliptique ou sensiblement rectangulaire dans la direction périphérique,
- **en ce que** la section transversale de l'élément de maintien (12) présente, dans la direction périphérique, au moins un évidement (22, 22a, 22b, 22c, 22d), où avec l'au moins un évidement (22, 22a, 22b, 22c, 22d) des arêtes sont créées dans la section transversale, lesquelles arêtes pouvant être pressées dans le matériau de l'extrémité de tuyau (4) et/ou dans la paroi du raccord, et
- **en ce que** l'au moins un évidement (22, 22a, 22b, 22c, 22d) est rectangulaire, en forme de V ou en forme de segment de cercle.

2. Raccord selon la revendication 1,
**caractérisé**
**en ce que** l'élément de maintien (12) est configuré pour être mis en forme annulaire fermée par un pressage de la section de pressage (6).

3. Raccord selon la revendication 1 ou 2,
**caractérisé**
**en ce que** les surfaces de contact (20, 20', 20a, 20a', 20b, 20b') sont formées sur au moins une surface inclinée par rapport à la direction circonférentielle ou sur des surfaces arrondies.

4. Raccord selon l'une des revendications 1 à 3,
**caractérisé**
**en ce que** les surfaces de contact (20, 20', 20a, 20a', 20b, 20b') sont sensiblement parallèles l'une à l'autre.

5. Raccord selon l'une des revendications 1 à 4,
**caractérisé**
**en ce que** les extrémités (18, 18') de l'élément de maintien (12) sont décalées l'une par rapport à l'autre dans la direction axiale.

6. Raccord selon l'une des revendications 1 à 5,
**caractérisé**
**en ce qu'**un élément de séparation supplémentaire (14) disposé entre l'élément d'étanchéité (10) et l'élément de maintien (12) est prévu.

7. Système de réalisation d'une liaison étanche
- avec un raccord (2) selon l'une des revendications 1 à 6 et
- avec une extrémité de tuyau (4),
**caractérisé**
**en ce que** la surface intérieure de la section de pressage (6) ainsi que l'élément de maintien (12) et l'élément d'étanchéité (14) sont adaptés à la surface extérieure de l'extrémité de tuyau (4).

8. Procédé de réalisation d'une liaison étanche entre un raccord (2) selon l'une des revendications 1 à 6 et une extrémité de tuyau (4),
- dans lequel l'extrémité de tuyau (4) est introduite au moins dans la section de pressage (6) du raccord (2),
- dans lequel le raccord (2) est pressé au moins au niveau de la section de pressage (6), ce par quoi l'élément d'étanchéité (10) est déformé entre le raccord (2) et l'extrémité de tuyau (4), et l'au moins un élément de maintien (12) est pressé dans le matériau de l'extrémité de tuyau (4), et
- dans lequel, au moyen du pressage, les surfaces de contact (20, 20', 20a, 20a', 20b, 20b') de l'élément de maintien (12) sont mises en contact les unes avec les autres.
